(19) Europäisches Patentamt

European Patent Office

Office européen des brevets

(11) Veröffentlichungsnummer: **0 266 608 B1**

# (12) EUROPÄISCHE PATENTSCHRIFT

(45) Veröffentlichungstag der Patentschrift: **25.03.92**

(21) Anmeldenummer: **87115206.2**

(22) Anmeldetag: **17.10.87**

(51) Int. Cl.⁵: **C04B 38/04**, B01D 39/20, C03C 11/00, C03B 19/06

(54) **Verfahren zur Herstellung von offenporigem Sinterglas mit grossem offenen Porenvolumen, das besonders geeignet ist als Filter für Flüssigkeiten und Gase bei hohen Durchflussgeschwindigkeiten.**

(30) Priorität: **05.11.86 DE 3637690**

(43) Veröffentlichungstag der Anmeldung:
**11.05.88 Patentblatt 88/19**

(45) Bekanntmachung des Hinweises auf die Patenterteilung:
**25.03.92 Patentblatt 92/13**

(84) Benannte Vertragsstaaten:
**AT CH FR GB IT LI NL SE**

(56) Entgegenhaltungen:
**EP-A- 0 117 484**

(73) Patentinhaber: **Schott Glaswerke**
**Hattenbergstrasse 10**
**W-6500 Mainz(DE)**

(84) Benannte Vertragsstaaten:
**CH FR IT LI NL SE AT**

(73) Patentinhaber: **Carl-Zeiss-Stiftung trading as**
**SCHOTT GLASWERKE**
**Hattenbergstrasse 10**
**W-6500 Mainz 1(DE)**

(84) Benannte Vertragsstaaten:
**GB**

(72) Erfinder: **Greulich, Norbert, Dr.**
**In der Meielache 19**
**W-6500 Mainz(DE)**
Erfinder: **Kiefer, Werner, Dr.**
**Jupiterweg 19**
**W-6500 Mainz(DE)**
Erfinder: **Rehm, Veronika**
**Oppenheimer Strasse 83**
**W-6500 Mainz(DE)**

(74) Vertreter: **Dr. Fuchs, Dr. Luderschmidt**
**Dipl.-Phys. Seids, Dr. Mehler Patentanwälte**
**Abraham-Lincoln-Strasse 7**
**W-6200 Wiesbaden(DE)**

## Beschreibung

Die Erfindung betrifft ein Verfahren zur Herstellung von offenporigem Sinterglas mit speziellen Eigenschaften für dessen Anwendung als Filter für flüssige oder gasförmige Medien.

Formteile aus offenporigem Sinterglas werden nach herkömmlichen Verfahren mit Porenvolumina von 50 - 85 % hergestellt. Bei Porenvolumina von mehr als 60 % ergeben sich jedoch Biegezugfestigkeiten von nur ca. 2 N/mm$^2$, die für eine Anwendung als Filtermedium zu niedrig sind, weil der maximal anwendbare Differenzdruck wesentlich kleiner als 1 bar wäre. Eine mögliche Abhilfe könnte darin bestehen, die Filter dicker auszuführen, was aber auf Kosten der Durchflußgeschwindigkeit geschehen würde.

Die für die Filtration ungünstigen Eigenschaften der offenporigen Sintergläser mit Porenvolumina über 60 % werden auf zwei Ursachen zurückgeführt:

(1) Die Verteilung der Porengrößen ist realtiv breit um einen Mittelwert. Die Durchflußgeschwindigkeit für ein flüssiges oder gasförmiges Medium wird hauptsächlich von den größten Porendurchmessern bestimmt, während die kleinen Poren aufgrund des Hagen-Poiseuille'schen Gesetzes nur wenig hierzu beitragen können. Andererseits vermindert das von kleinen Poren gebildete Porenvolumen die Biegezugfestigkeit. Bild 1 zeigt an einer herkömmlichen Sinterglasprobe mit der Quecksilber-Penetrationsmethode gemessene Porengrößenverteilung. Weitere Eingeschaften dieses Sinterglaskörpers: Mittlerer Porendurchmesser 27 $\mu$m, Biegezugfestigkeit 1,8 N/mm$^2$, Durchflußrate für Wasser 16 ml/cm$^2$. s, Porenvolumen 74 %.

(2) Nach herkömmlichem Verfahren hergestelltes offenporiges Sinterglas hat Poren mit stark strukturierten inneren Oberflächen, wie die rasterelektronenmikroskopische Aufnahme in Bild 2 zeigt.

Diese starke Strukturierung behindert den freien Durchfluß strömender Medien. Dort haftende Filterrückstände sind nur schwer wieder entfernbar. Weiterhin können die gezeigten Strukturen zum Ausgangspunkt von Rissen werden, was die Biegezugfestigkeit herabsetzt.

Die handelsüblichen Laborfilter aus Borosilikatglas 3.3 haben ebenfalls stark strukturierte innere Oberflächen, wie die rasterelektronenmikroskopische Aufnahme in Bild 3 zeigt, in dem eine Bruchkante eines zur Zeit handelsüblichen Laborfilters aus Borosilikatglas 3.3 (DIN ISO 3585, 650-fache Vergrößerung) dargestellt ist.

Solche Filter werden durch Versintern von Glaspulver ohne Zuschlagstoffe hergestellt. Deutlich sind noch die einzelnen Glaspartikel, wie sie vor dem Sintern vorhanden waren, erkennbar. Derartige Strukturen erschweren den Durchfluß strömender Medien und die Reinigung nach Gebrauch der Filter. Solche Filter sind außerdem nur mit Porenvolumina bis maximal 50 % herstellbar; ihre Porenradien weisen noch wesentlich breitere Verteilungen auf als das in Bild 1 dargestellte Sinterglas.

Aus der DE-PS 33 05 854 ist ein Verfahren zur Herstellung von poröse Sinterglas bekannt, bei welchem Glaspulver mit einer leicht löslichen Substanz gemischt und das Gemisch auf die Sintertemperatur des Glases erhitzt und dort so lange gehalten wird, bis das Glaspulver versintert ist, worauf das Produkt abgekühlt und die leicht lösliche Substanz herausgelöst wird. Die hierbei auftretende Porengrößenverteilung ist ähnlich der in Bilde 1 dargestellten.

Ziel der vorliegenden Erfindung ist ein Verfahren zur Herstellung von offenporigem Sinterglas mit großem offenem Porenvolumen, hohen Biegezugfestigkeiten und guten Durchflußgeschwindigkeiten, welches hervorragend geeignet ist als Filtermaterial.

Dieses Ziel wird erfindungsgemäß erreicht mit einem Verfahren gemäß den Patentansprüchen.

Bei Anwendung des erfindungsgemäßen Verfahrens treten die geschilderten Nachteile des herkömmlichen offenporigen Sinterglases nicht mehr auf. Bild 4 zeigt als Beispiel die Porenverteilung in einem Sinterglaskörper, der nach dem Verfahren von Anspruch 3 hergestellt wurde, Bild 5 eine rasterelektronenmikroskopische Aufnahme des gleichen Sinterglaskörpers.

Weitere Eigenschaften diese Sinterglaskörpers:
Mittlerer Porendurchmesser 30 $\mu$m, Biegezugfestigkeit 10 N/mm$^2$, Durchflußrate für Wasser 25 ml/cm$^2$. s, Porenvolumen 67 %.

Man erkennt deutlich, daß die in Bild 4 dargestellte Verteilung der Porenradien wesentlich schmaler um den gewünschten Mittelwert (hier 15 $\mu$m) gestreut ist als in Bild 1. Das in Bild 5 dargestellte Material weist deutlich höhere Festigkeitswerte (10 N/mm$^2$) auf als das in Bild 2 dargestellte (1,8 N/mm$^2$). Beim Vergleich von Bild 5 mit Bild 2 fällt die wesentlich glattere Struktur der Porenwände bei dem erfindungsgemäßen Sinterglas besonders auf.

Ein wesentlicher Vorteil des erfindungsgemäßen Verfahrens besteht darin, daß jetzt auch Laborfilter aus Borosilikatglas nach DIN ISO 3585 nach dem Prinzip des offenporigen Sinterglases hergestellt werden können, die bei einem Porenvolumen von mehr als 60 % und damit sehr hohen Durchflußgeschwindigkeiten für z.B. wässrige Medien auch eine für diese Anwendung ausreichende Biegezugfestigkeit aufweisen.

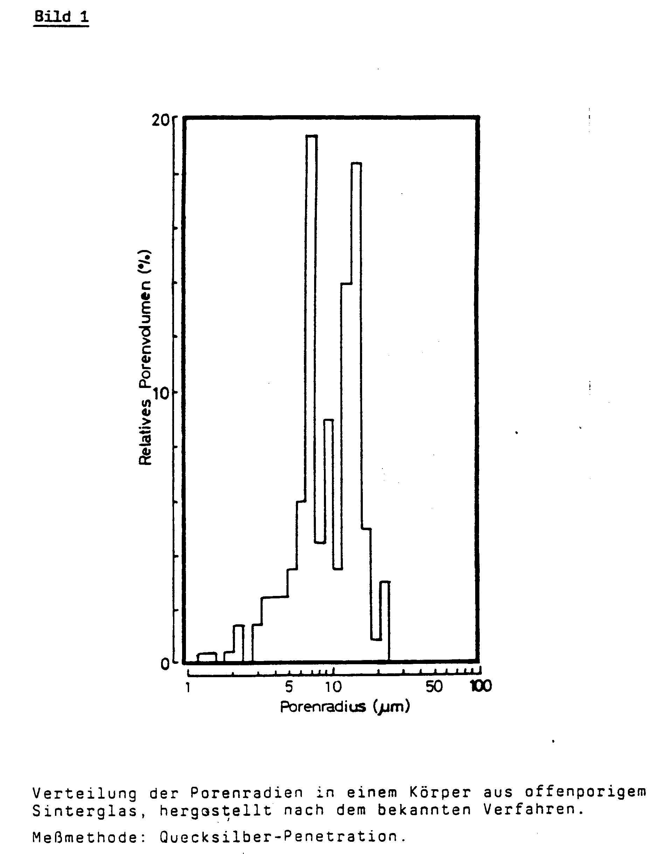

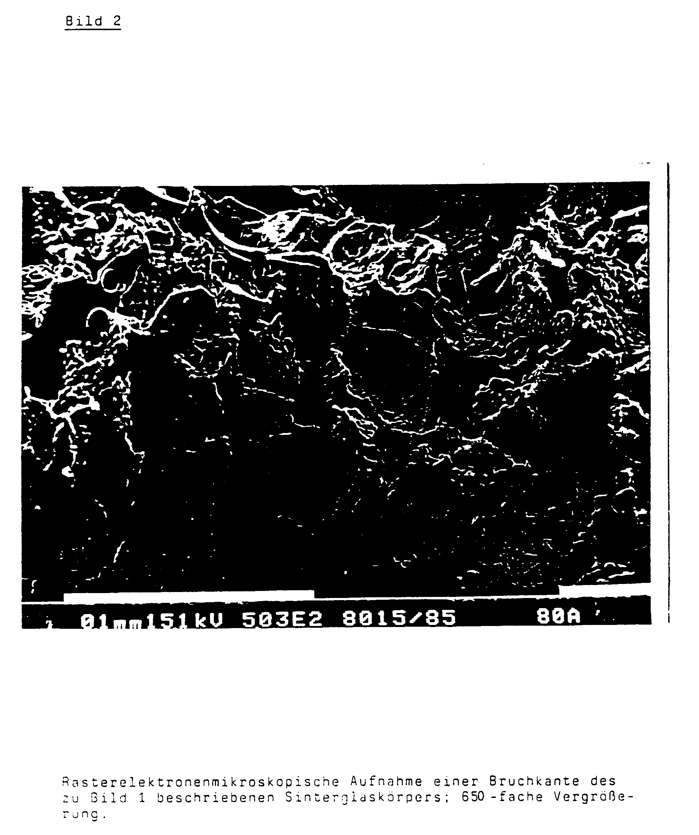

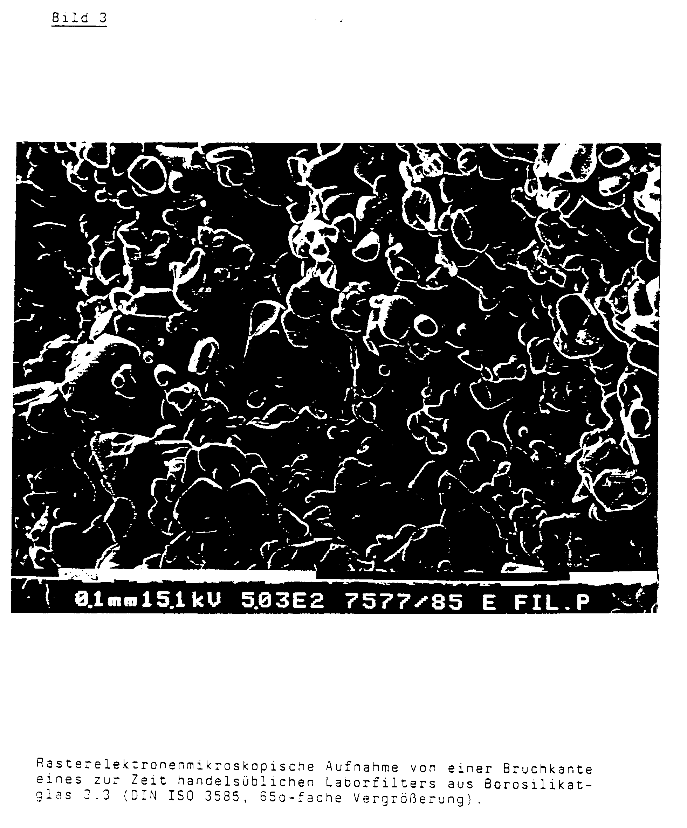

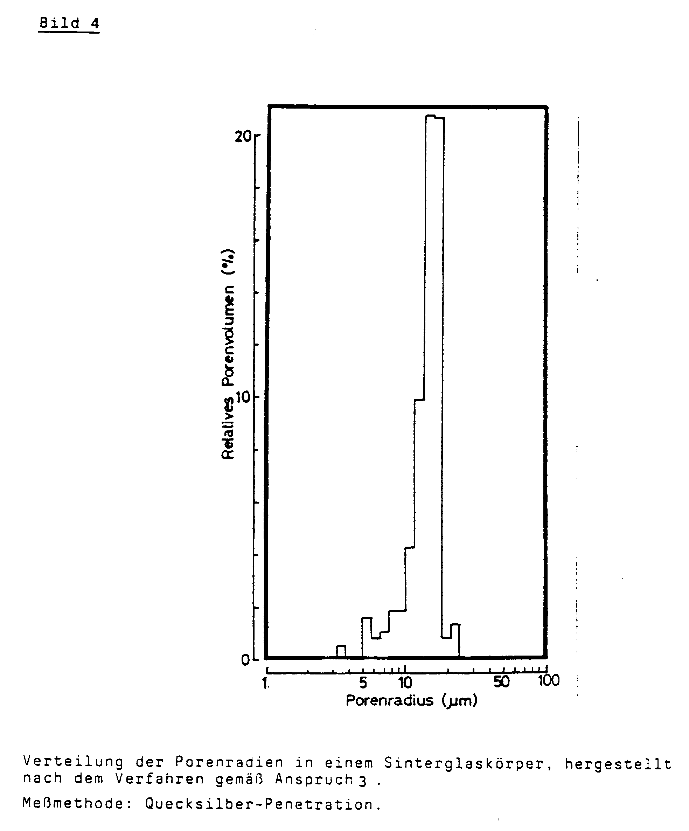

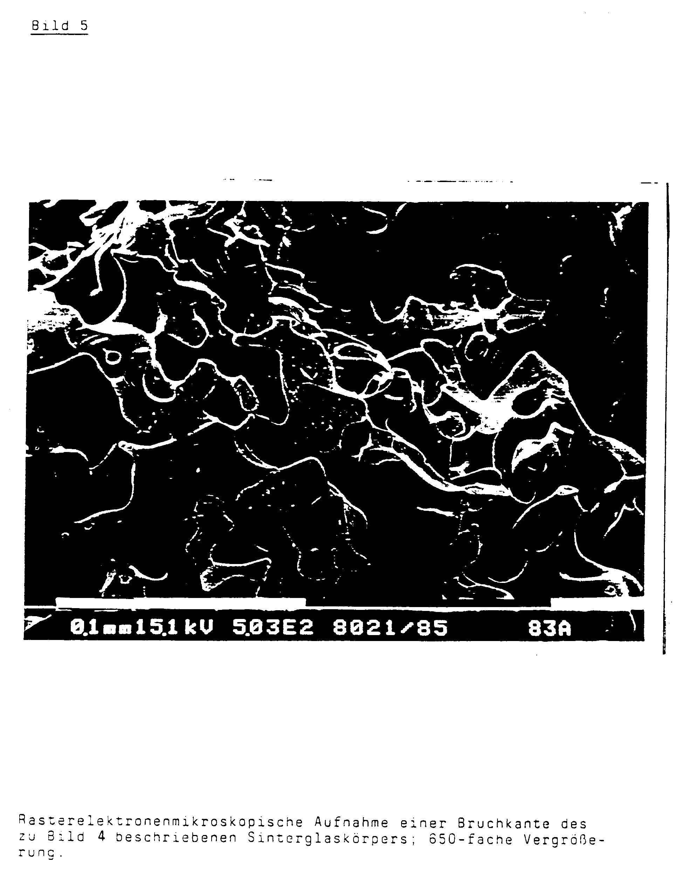

Dank der in Abbildung 5 gezeigten glatten, verrundeten und nicht durch Mikroporen von 0,5 - 5 $\mu$m Durchmesser durchbrochenen Porenwände ergeben sich als zusätzlicher Vorteil gegenüber anderen Laborfiltermaterialien aus Glas oder Keramik wesentlich erleichterte Reinigungsmöglichkeiten nach dem Gebrauch der Filter. Zusätzlich beschleunigt sich der Auswaschvorgang des Salzes bei der Herstellung der Filter.

Die Erfindung wird durch die nachstehenden Ausführungsbeispiele näher erläutert. In diesen Beispielen sind die Rezepturen angegeben, die für Porengrößenklassen der Laborfilter nach ISO 4793 angewendet werden können. Durch Wahl anderer Korngrößen für das Salz, das Glas oder die daraus hergestellten Granulate können nach dem erfindungsgemäßen Verfahren auch Filter mit anderen Porengrößen als den genannten, bei gleichen Porenvolumina, hergestellt werden.

Beispiel 1

P 16 - Filter, Verfahren nach Anspruch 4

75 Gew.-% $K_2SO_4$ (Korngröße < 40 $\mu$m), 25 Gew.-% Borosilikatpulver DURAN[R] der Fa. SCHOTT Glaswerke (Typen-Nr. 8330, Korngröße <20 $\mu$m) und 100 ml einer 30 %-igen wässrigen Polyäthylenglykollösung pro kg Mischung werden intensiv vermischt. Das resultierende Gemenge wird getrocknet und auf 200 - 300 $\mu$m Korngröße abgesiebt. Diesem Ausgangsgranulat werden 10 Gew.-%, bezogen auf das Ausgangsgranulat, reines Glaspulver des oben erwähnten Glastyps mit Korngrößen <40 $\mu$m in Form eines Granulats mit der Korngröße 200 - 300 $\mu$m untergemischt. Die resultierende Mischung wird mit einem Flächendruck von mindestens 1000 bar trocken verpreßt. Die Preßlinge werden bei 860°C versintert, und anschließend wird das $K_2SO_4$ vollständig ausgewaschen.

Man erhält so ein Filter der Porengrößenklasse P 16 aus Borosilikatglas 3.3 nach DIN ISO 3585 mit folgenden Eigenschaften:

| | |
|---|---|
| - Maximaler Porendurchmesser: | 15 $\mu$m |
| - Biegezugfestigkeit: | 11 N/mm$^2$ |
| - Porenvolumen: | 65 % |
| - Dichte: | 0,79 g/cm$^3$ |
| - Durchflußrate für Wasser: (1 bar Differenzdruck, 4 mm Filterdicke) | 6,5 ml/cm$^2$ . s |
| - Durchflußrate für Luft bei 0,1 bar Differenzdruck und 4 mm Filterdicke | 28 ml NTP/cm$^2$ . s |

Beispiel 2:

P 40 - Filter, Verfahren nach Anspruch 2

75 Gew.-% $K_2SO_4$ (Korngröße <40 $\mu$m), 25 Gew.-% Glaspulver mit Korngrößen <20 $\mu$m des in Beispiel 1 erwähnten Glastyps und 100 ml einer 30 %-igen wässrigen Polyäthylenglykollösung pro kg Mischung werden intensiv vermischt. Dem Ausgangsgranulat wird 10 Gew.-%, bezogen auf dieses Granulat, Glaspulver mit Korngrößen <40 $\mu$m des gleichen Glastyps zugegeben. Die Weiterverarbeitung geschieht wie in Beispiel 1 angegeben.

Man erhält so ein Filter der Porengrößenklasse P 40 aus Borosilikatglas 3.3 nach DIN ISO 3585 mit folgenden Eigenschaften:

| | |
|---|---|
| - Maximaler Porendurchmesser: | 31 $\mu$m |
| - Biegezugfestigkeit: | 7 N/mm$^2$ |
| - Porenvolumen: | 67 % |
| - Dichte: | 0,75 g/cm$^3$ |
| - Durchflußrate für Wasser: (1 bar Differenzdruck, 4 mm Filterdicke) | 29 ml/cm$^2$ . s |
| - Durchflußrate für Luft: (0,1 bar Differenzdruck, 4 mm Filterdicke) | 183 ml/cm$^2$ . s |

Beispiel 3:

P 100 - Filter, Verfahren nach Anspruch 2

55 Gew.-% $K_2SO_4$ (Korngröße 100 - 200 $\mu$m), 45 Gew.-% Glaspulver mit Korngrößen 40 - 60 $\mu$m des im Beispiel 1 erwähnten Glastyps und 100 ml einer wässrigen 30%-igen Polyäthylenglykollösung pro kg Mischung werden intensiv vermischt. Dem Ausgangsgranulat wird 10 Gew.-%, bezogen auf dieses Granulat, Glaspulver mit Korngrößen <40 $\mu$m des gleichen Glastyps zugegeben. Die Weiterverarbeitung geschieht wie in Beispiel 1 angegeben.

Man erhält so ein Filter der Porengrößenklasse P 100 aus Borosilikatglas 3.3 nach DIN ISO 3585 mit folgenden Eigenschaften:

| | |
|---|---|
| - Maximaler Porendurchmesser: | 97 $\mu$m |
| - Biegezugfestigkeit: | 5 N/mm$^2$ |
| - Porenvolumen: | 60 % |
| - Dichte: | 0,93 g/cm$^3$ |
| - Durchflußrate für Wasser: (1 bar Differenzdruck, 4 mm Filterdicke) | 45 ml/cm$^2$ . s |
| - Durchflußrate für Luft: (0,1 bar Differenzdruck, 4 mm Filterdicke) | 260 ml/cm$^2$ . s |

Beispiel 4

P 160 - Filter, Verfahren nach Anspruch 2

55 Gew.-% $K_2SO_4$-Pulver mit Korngrößen 100 - 200 $\mu$m, 45 Gew.-% Glaspulver des in Beispiel 1 erwähnten Glastyps und 100 ml einer 30 %-igen wässrigen Polyäthylenglykollösung pro kg Mischung werden intensiv vermischt. Die Weiterverarbeitung geschieht wie in Beispiel 1, wobei abweichend davon dem Ausgangsgranulat 10 Gew.-% Glaspulver mit Korngrößen < 100 $\mu$m des gleichen Glastyps zugegeben werden.

Man erhält so ein Filter der Porengrößenklasse P 160 aus Borosilikatglas 3.3 nach DIN ISO 3585 mit folgenden Eigenschaften:

| | |
|---|---|
| - Maximaler Porendurchmesser | 120 $\mu$m |
| - Biegezugfestigkeit: | 3,5 N/mm$^2$ |
| - Porenvolumen: | 67 % |
| - Dichte: | 0,78 g/cm$^3$ |
| - Durchflußrate für Wasser: (1 bar Differenzdruck, 4 mm Filterdicke) | 74 ml/cm$^2$ . s |
| - Durchflußrate für Luft: (0,1 bar Differenzdruck, 4 mm Filterdicke) | 400 ml/cm$^2$ . s |

**Patentansprüche**

**1.** Verfahren zur Herstellung von offenporigen Sinterkörpern aus Glas mit großem offenen Porenvolumen, hohen Biegezugfestigkeiten, definiert einstellbaren Porengrößen und hohen Durchflußgeschwindigkeiten für Flüssigkeiten und Gase, durch Versintern eines Glas-Salz-Gemisches und nachträgliches Auswaschen des Salzes, dadurch gekennzeichnet, daß ein Ausgangsgranulat aus Glaspulver, gegenüber diesem grobkörnigerem Salzpulver und Bindemittel hergestellt wird, diesem Ausgangsgranulat 5 bis 20 Gew.-% bezogen auf das Ausgangsgranulat Glaspulver zugesetzt werden, die Masse einer Formgebung unterzogen wird, die entstandenen Formkörper auf die Sintertemperatur des Glases erhitzt und versintert werden und danach das Salz aus dem Sinterglas herausgewaschen wird.

**2.** Verfahren nach Anspruch 1, dadurch gekennzeichnet, daß das dem Ausgangsgranulat zugesetzte Glaspulver Korngrößen $\leq$ 100 $\mu$m, vorzugsweise $\leq$ 40 $\mu$m aufweist.

**3.** Verfahren nach Anspruch 1 oder 2, dadurch gekennzeichnet, daß das dem Ausgangsgranulat zugesetzte Glaspulver vor der Zugabe mit Hilfe eines Bindemittels zu einem Granulat verarbeitet wird.

**4.** Verfahren nach Anspruch 3, dadurch gekennzeichnet, daß das Granulat aus Glaspulver und Bindemittel

4

Korngrößen zwischen 63 und 400 μm aufweist.

5. Offenporige Sinterkörper, dadurch gekennzeichnet, daß sie Biegezugfestigkeiten von 3,5 - 12 N/mm$^2$, Porenvolumina von 60 - 75% und exakt einstellbare Porendurchmesser im Bereich von 10 - 15 μm, 30 - 40 μm, 80 - 100 μm oder 110 - 150 μm aufweisen und nach dem Verfahren gemäß den Ansprüchen 1 bis 4 hergestellt sind.

## Claims

1. Process for manufacturing open-pored sintered glass bodies having a high open pore volume, high flexural tensile strengths, precisely adjustable pore sizes and high through-flow rates for liquids and gases, by sintering a glass/salt mixture and subsequently washing out the salt, characterised in that a starting granular material is manufactured from glass powder, a salt powder of a coarser grain than the glass powder and binding agent, 5 to 20% by weight, relative to the starting granular material, of glass powder is added to said starting granular material, the substance is subjected to shaping, the resultant shaped bodies are heated to the sintering temperature of the glass and sintered and then the glass is washed out of the sintered glass.

2. Proces according to claim 1, characterised in that the glass powder added to the starting granular material has grain sizes ≤ 100 μm, preferably ≤ 40 μm.

3. Process according to claim 1 or 2, characterised in that the glass powder added to the starting granular material is, prior to adding, processed with the aid of a binding agent into a granular material.

4. Process according to claim 3, characterised in that the granular material comprising glass powder and binding agent has grain sizes between 63 and 400 μm.

5. Open-pored sintered bodies, characterised in that they have flexural tensile strengths of 3.5 - 12 N/mm$^2$, pore volumes of 60 - 75% and precisely adjustable pore diameters in the range of 10 - 15 μm, 30 - 40 μm, 80 - 100 μm or 110 - 150 μm and are manufactured using the process according to claims 1 to 4.

## Revendications

1. Procédé de fabrication de corps frittés à pores ouverts en verre, avec un grand volume de pores ouverts, des résistances à la flexion et à la traction élevées, des dimensions de pores réglables de façon précise et de grandes vitesses de débit pour des liquides et des gaz, par frittage d'un mélange verre-sel et extraction par lavage ultérieur du sel, caractérisé par le fait qu'on fabrique un granulat de départ constitué de poudre de verre, de poudre de sel, ayant des grains plus gros que la poudre de verre, et d'un liant, on ajoute à ce granulat de départ 5 à 20 % en poids, par rapport au granulat de départ, de poudre de verre, on soumet la masse à un formage, on chauffe et on fritte les corps formés obtenus à la température de frittage du verre, et on extrait ensuite le sel par lavage du verre fritté.

2. Procédé selon la revendication 1, caractérisé par le fait que la poudre de verre ajoutée au granulat de départ présente des grosseurs de grains ≤ 100 μm, de préférence ≤ 40 μm.

3. Procédé selon la revendication 1 ou 2, caractérisé par le fait qu'on transforme la poudre de verre en granulat à l'aide d'un liant, avant de l'incorporer dans le granulat de départ.

4. Procédé selon la revendication 3, caractérisé par le fait que le granulat de poudre de verre et de liant présente des grosseurs de grains comprises entre 63 et 400 μm.

5. Corps frittés à pores ouverts, caractérisés par le fait qu'ils présentent des résistances à la flexion et à la traction de 3,5 à 12 N/mm$^2$, des volumes de pores de 60 à 75 % et des diamètres de pores réglables de manière précise situés dans la plage de 10 à 15 μm, de 30 à 40 μm, de 80 à 100 μm ou de 110 à 150 μm, et sont fabriqués suivant le procédé selon les revendications 1 à 4.

**Bild 1**

Verteilung der Porenradien in einem Körper aus offenporigem Sinterglas, hergestellt nach dem bekannten Verfahren.

Meßmethode: Quecksilber-Penetration.

Bild 2

Rasterelektronenmikroskopische Aufnahme einer Bruchkante des
zu Bild 1 beschriebenen Sinterglaskörpers; 650-fache Vergrößerung.

Bild 3

0.1mm 15.1 kV 5.03E2 7577/85 E FIL.P

Rasterelektronenmikroskopische Aufnahme von einer Bruchkante
eines zur Zeit handelsüblichen Laborfilters aus Borosilikatglas 3.3 (DIN ISO 3585, 65o-fache Vergrößerung).

<u>Bild 4</u>

Verteilung der Porenradien in einem Sinterglaskörper, hergestellt nach dem Verfahren gemäß Anspruch 3 .

Meßmethode: Quecksilber-Penetration.

Bild 5

Rasterelektronenmikroskopische Aufnahme einer Bruchkante des
zu Bild 4 beschriebenen Sinterglaskörpers; 650-fache Vergrößerung.